# EUROPÄISCHE PATENTANMELDUNG

(11) **EP 1 582 761 A1**
(43) Veröffentlichungstag der Anmeldung: **05.10.2005**
(21) Anmeldenummer: 05005318.0
(22) Anmeldetag: 11.03.2005
(51) Int. Cl.: F16D 65/12, F16D 69/04, F16D 13/64

(54) **Reibbelag für eine Kupplungsscheibe einer Reibungskupplung**

(30) Priorität: 02.04.2004 DE 102004016291
(71) Anmelder: ZF FRIEDRICHSHAFEN AG, 88046 Friedrichshafen (DE)
(72) Erfinder: Lindner, Joachim, 97456 Dittelbrunn (DE); Brunner, Matthias, 97525 Schwebheim (DE)

(57) **Zusammenfassung**

Ein Reibbelag für eine Kupplungsscheibe einer Reibungskupplung umfasst wenigstens ein ringförmiges oder ringsegmentförmiges Reibelement (12) und an einer von einer Reibseite (14) abgewandten Rückseite (18) des Reibelements (12) eine Mehrzahl von mit dem Reibelement (12) fest verbundenen Anbindungselementen (20), über welche das Reibelement (12) an einem Reibbelagträger (32) festzulegen ist.

## Beschreibung

Die vorliegende Erfindung betrifft einen Reibbelag für eine Kupplungsscheibe einer Reibungskupplung.

Aus der DE-OS 1 425 356 ist eine Kupplungsscheibe bekannt, bei welcher an den beiden Seiten eines ringscheibenartig ausgestalteten Reibbelagträgers Reibbeläge angeordnet bzw. festgelegt sind. Jeder dieser Reibbeläge an sich umfasst ein ringförmiges Anbindungselement aus Blechmaterial, auf dem ein ebenso ringförmiges Reibelement durch Verklebung festgelegt ist. Zur Anbindung eines so aufgebauten Reibbelags an den Reibbelagträger weist das ringförmige Anbindungselement desselben Durchgangsöffnungen für Nietbolzen auf. In dem Bereich, in dem diese Nietbolzen positioniert oder zu positionieren sind, sind in dem zugehörigen Reibelement Aussparungen gebildet, durch welche hindurch beim Festlegen die Nietbolzen geführt werden können bzw. in welchen die Köpfe der Nietbolzen nach Festlegung zu liegen kommen.

Auf diese Art und Weise ist ein Reibelement über das daran durch Verklebung festgelegte Anbindungselement am Reibbelagträger getragen, ohne dass eine direkte Trage- oder Haltewechselwirkung zwischen dem Reibelement selbst und den Befestigungselementen in einer Richtung orthogonal zu der Reibseite bzw. der daran vorgesehenen Reiboberfläche besteht.

Es ist die Aufgabe der vorliegenden Erfindung, einen Reibbelag für eine Kupplungsscheibe vorzusehen, welcher bei einfachem Aufbau zu einem verbesserten Betriebsverhalten der Kupplungsscheibe beiträgt.

Erfindungsgemäß wird diese Aufgabe gelöst durch einen Reibbelag für eine Kupplungsscheibe einer Reibungskupplung, umfassend wenigstens ein ringförmiges oder ringsegmentförmiges Reibelement und an einer von einer Reibseite abgewandten Rückseite des Reibelements eine Mehrzahl von mit dem Reibelement fest verbundenen Anbindungselementen, über welche das Reibelement an einem Reibbelagträger festzulegen ist.

Durch den Übergang von einem ringförmigen Anbindungselement zu einer Mehrzahl diskret verteilt liegender Anbindungselemente, von welchen jedes für sich dann mit dem Reibelement fest verbunden ist, wird eine deutliche Verringerung der Gesamtmasse eines derartigen Reibbelags und somit eine ebenso deutliche Verringerung des gesamten Massenträgheitsmomentes einer einen derartigen Reibbelag aufweisenden Kupplungsscheibe erzielt.

Um die feste Verbindung zwischen den Anbindungselementen und dem zugehörigen Reibelement erlangen zu können, wird vorgeschlagen, dass die Anbindungselemente an dem Reibelement durch Verklebung festgelegt sind.

Zur Festlegung eines erfindungsgemäßen Reibbelags an einem Reibbelagträger kann weiter vorgesehen sein, dass jedes Anbindungselement wenigstens eine Durchgangsöffnung für ein Befestigungselement aufweist. Die wenigstens eine Durchgangsöffnung liegt dabei vorzugsweise im radialen Erstreckungsbereich des Reibelements, radial hier bezogen auf eine Drehachse des Reibbelags im Rotationsbetrieb.

Um die Dicke des Reibelements im Kupplungsbetrieb und bei dem dabei auftretenden Verschleiß so effizient als möglich nutzen zu können, wird weiter vorgeschlagen, dass in dem Reibelement in Zuordnung zu der wenigstens einen Durchgangsöffnung eine Aussparung ausgebildet ist, so dass keine Befestigungswechselwirkung zwischen dem Reibelement und einem Befestigungselement im Wesentlichen orthogonal zu der Reibseite des Reibelements besteht. Dies hat zur Folge, dass keine durch ein Befestigungselement mit zu erfassende Materialbereiche des Reibelements vorhanden sind, die dann aufgrund des Vorhandenseins der Befestigungselemente für den Kupplungsreibbetrieb nicht mehr genutzt werden könnten. Weiter kann bei dem erfindungsgemäßen Reibbelag vorgesehen sein, dass wenigstens ein eine Durchgangsöffnung aufweisender Befestigungsbereich bezüglich eines an dem Reibelement festgelegten Körperbereichs eines Anbindungselements versetzt ist. Hier ist vorzugsweise der Versatz des Befestigungsbereichs in Richtung von der Reibseite des Reibelements weg.

Um die axiale Dicke eines erfindungsgemäßen Reibbelags so gering als möglich halten zu können, wird weiter vorgeschlagen, dass bei wenigstens einem Anbindungselement an der Rückseite des Reibelements eine Vertiefung ausgebildet ist, in welcher das Anbindungselement aufgenommen ist. Um dabei eine flächige Anlage des Reibbelags an einem Reibbelagträger erlangen zu können, kann weiter vorgesehen sein, dass das in der Vertiefung aufgenommene Anbindungselement im Wesentlichen bündig mit der Rückseite des Reibelements abschließt.

Wenigstens eines der Anbindungselemente, vorzugsweise aber alle diese Anbindungselemente, kann kreisförmig, langgestreckt oder kreuz- bzw. sternförmig ausgebildet sein und kann beispielsweise aus Blechmaterial gefertigt sein.

Die vorliegende Erfindung betrifft ferner eine Kupplungsscheibe mit wenigstens einem erfindungsgemäßen Reibbelag, wobei der Reibbelag im Bereich der Anbindungselemente durch Befestigungselemente an einem Reibbelagträger festgelegt ist.

Bei einer derartigen Kupplungsscheibe können die Befestigungselemente beispielsweise Nietbolzen umfassen, und es kann vorgesehen sein, dass die Befestigungselemente im Bereich des Reibbelags zur Festlegung desselben an dem Reibbelagträger nur an den Anbindungselementen angreifen.

Die Erfindung wird nachfolgend mit Bezug auf die beiliegenden Zeichnungen detailliert beschrieben. Es zeigt:
- Fig. 1: eine perspektivische Teil-Schnittansicht eines erfindungsgemäßen Reibbelags;
- Fig. 2: eine Teillängsschnittansicht des in Fig. 1 gezeigten Reibbelags;
- Fig. 3: eine der Fig. 1 entsprechende Ansicht einer alternativen Ausgestaltungsart;
- Fig. 4: eine weitere der Fig. 1 entsprechende Ansicht einer alternativen Ausgestaltungsart;
- Fig. 5: den Reibbelag der Fig. 4 in anderer perspektivischer Ansicht;
- Fig. 6: eine Abwandlung des in Fig. 4 gezeigten Reibbelags;
- Fig. 7: eine weitere perspektivische Teil-Schnittansicht eines erfindungsgemäßen Reibbelags;
- Fig. 8: den in Fig. 7 gezeigten Reibbelag in anderer Ansicht;
- Fig. 9: eine Längsschnittansicht des in Fig. 7 gezeigten Reibbelags;
- Fig. 10: eine weitere perspektivische Teil-Schnittansicht eines erfindungsgemäßen Reibbelags;
- Fig. 11: den in Fig. 10 gezeigten Reibbelag in anderer perspektivischer Ansicht.

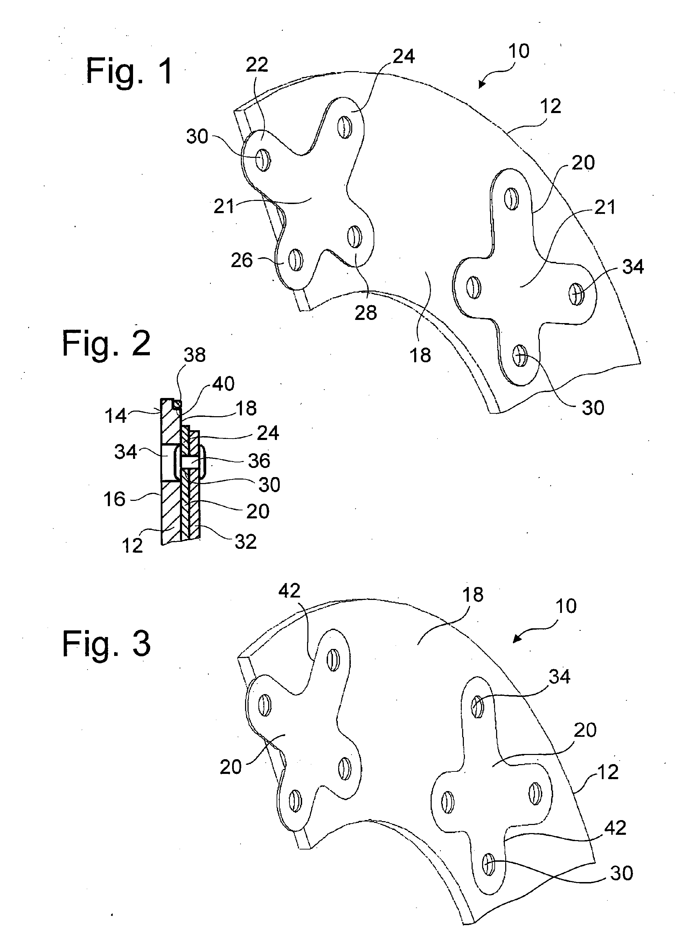

In Fig. 1 ist ein erfindungsgemäßer Reibbelag 10 für eine Kupplungsscheibe allgemein mit 10 bezeichnet. Der Reibbelag umfasst in der dargestellten Ausgestaltungsform ein als Kreisring ausgebildetes Reibelement 12 aus Reibmaterial, beispielsweise organischem oder anorganischem Reibmaterial. Dieses Reibelement 12 stellt an seiner in Fig. 2 erkennbaren Reibseite 14 eine Reiboberfläche 16 bereit, die in Wechselwirkung beispielsweise mit einer Anpressplatte oder einem Schwungrad einer Kupplung treten kann.

An einer von der Reibseite 14 abgewandt liegenden und somit reibend nicht wirksam werdenden Rückseite 18 des Reibelements 12 sind in Umfangsrichtung - bezogen auf eine hier nicht dargestellte Drehachse eines derartigen Reibbelags 10 im Kupplungsbetrieb - aufeinander folgend mehrere Anbindungselemente 20 vorgesehen. Diese beispielsweise durch Ausstanzen aus Blechmaterial hergestellten Anbindungselemente 20 sind an der Rückseite 18 des Reibelements 12 durch Verkleben und somit flächige Anbindung festgelegt.

Die in Fig. 1 erkennbaren Anbindungselemente 20 weisen eine sternförmige bzw. kreuzförmige Konfiguration auf, wobei die Anordnung so sein kann, dass die Stern- bzw. Kreuzschenkel 22, 24, die sich von einem zentralen Bereich 21 nach radial außen erstrecken, eine größere Länge auf weisen, als die in Richtung nach radial innen sich erstreckenden Schenkel 26, 28. Im Endbereich jedes Schenkels ist eine Durchgangsöffnung 30 ausgebildet. Durch diese Durchgangsöffnung 30 hindurch wird jeweils ein Befestigungselement geführt, über welches der Reibbelag 10 bzw. das Reibelement 12 desselben an einem in der Fig. 2 auch erkennbaren Reibbelagträger 32, beispielsweise in Form eines Blechscheibenteils, festgelegt wird. In demjenigen Bereich, in welchem an den Anbindungselementen 20 jeweils eine Durchgangsöffnung 30 ausgebildet ist, weist auch das Reibelement 12 jeweils eine Aussparung 34 auf. Diese Aussparungen 34 sind so dimensioniert, dass einerseits die der Festlegung dienenden Befestigungselemente 36, die allgemein als Nietbolzen ausgebildet sind, hindurchgeführt werden können, und dass nach Festlegung eine Haltewechselwirkung zwischen diesen Befestigungselementen 30 und dem Reibelement 12 in axialer Richtung, also im Wesentlichen orthogonal zur Reiboberfläche 16, nicht besteht. Eine derartige Haltewechselwirkung besteht, wie in Fig. 2 deutlich erkennbar ist, lediglich zwischen den Befestigungselementen 36 und den verschiedenen Anbringungselementen 20. Gleichwohl kann die Dimensionierung der Aussparungen 34 so sein, dass quer zu dieser bereits angesprochenen Haltewechselwirkungsrichtung, also nunmehr im Wesentlichen parallel zur Reiboberfläche 16, eine Abstützung des Reibelements 12 an den Befestigungselementen 36 bzw. den erweiterten Kopfbereichen derselben erfolgt. Es ist somit eine Stabilisierung des Reibelements 12 gegen die im Drehbetrieb auftretenden Radialkräfte gegeben. Eine weitere dieser Stabilisierung dienende Komponente ist gebildet durch einen beispielsweise aus Draht- der Metallmaterial gebildeten Ring 38. Dieser ist in einer am Außenumfangsbereich des Reibelements 12 gebildeten Aussparung 40 aufgenommen und sorgt somit ebenfalls für eine Stabilisierung des Reibelements 12 gegen Radialeinflüsse. Um dabei die Dicke des Reibelements 12 soweit als möglich ausnutzen zu können, ist diese Aussparung 40 im Bereich der Rückseite 18 vorgesehen und ist vorzugsweise in axialer Richtung derart dimensioniert, dass ein Abrieb des Reibelements 12 bis auf das Niveau der Befestigungselemente 36 möglich ist.

Durch das Bereitstellen einzelner Anbindungselemente 20 an dem Reibelement 12 wird das Massenträgheismoment eines so gebildeten Reibbelags 10 deutlich gemindert. Gleichwohl kann durch verschiedene konstruktive Maßnahmen die strukturelle Integrität des Reibelements 12 bei den im Drehbetrieb auftretenden Fliehkrafteinwirkungen sichergestellt werden.

Bei der in Fig. 3 gezeigten Ausgestaltungsform des erfindungsgemäßen Reibbelags 10 sind an der Rückseite 18 des Reibelements 12 Vertiefungen 42 gebildet. Diese Vertiefungen 42 sind in Tiefenrichtung, d.h. in axialer Richtung, so dimensioniert, dass sie im Wesentlichen der Dicke der darin aufzunehmenden Anbindungselemente 20 angepasst sind. Weiterhin ist die Formgebung dieser Vertiefungen 42 an die Formgebung der darin aufzunehmenden Anbindungselemente 20 angepasst. Auf diese Art und Weise wird sichergestellt, dass die Anbindungselemente 20 mit der Rückseite 18 des Reibelements 12 bündig abschließen, so dass auch bei Festlegung am Reibbelagträger 32 keine Zwischenräume entstehen und somit eine flächige Anlage vorhanden ist.

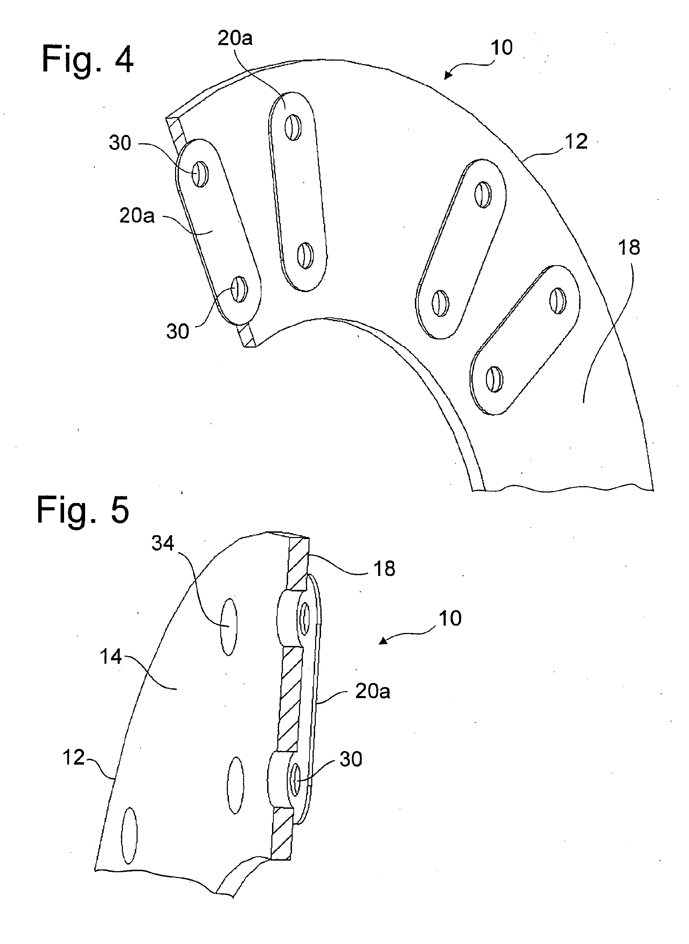

Eine alternative Ausgestaltungsart eines erfindungsgemäßen Reibbelags 10 ist in den Fig. 4 und 5 gezeigt. Man erkennt hier, dass die an der Rückseite des Reibelements 12 vorgesehenen Anbindungselemente 20a mit langgestreckter Kontur ausgestaltet sind und im Wesentlichen radial sich erstreckend am Reibelement 12 durch Verklebung festgelegt sind. In ihren Endbereichen weisen diese Anbindungselemente 20a wiederum die Durchgangsöffnungen 30 zur Festlegung an einem Reibbelagträger auf. Man erkennt weiter, dass, ebenso wie bei den anderen beschriebenen bzw. noch zu beschreibenden Ausgestaltungsformen, hier jeweils zwei bzw. auch mehrere dieser Anbindungselemente 20a zu einer Gruppe zusammengefasst sein können, wobei der gegenseitige Abstand der Anbindungselemente 20a in einer derartigen Gruppe dann kleiner ist, als der Umfangsabstand zwischen einzelnen Anbindungselementengruppen.

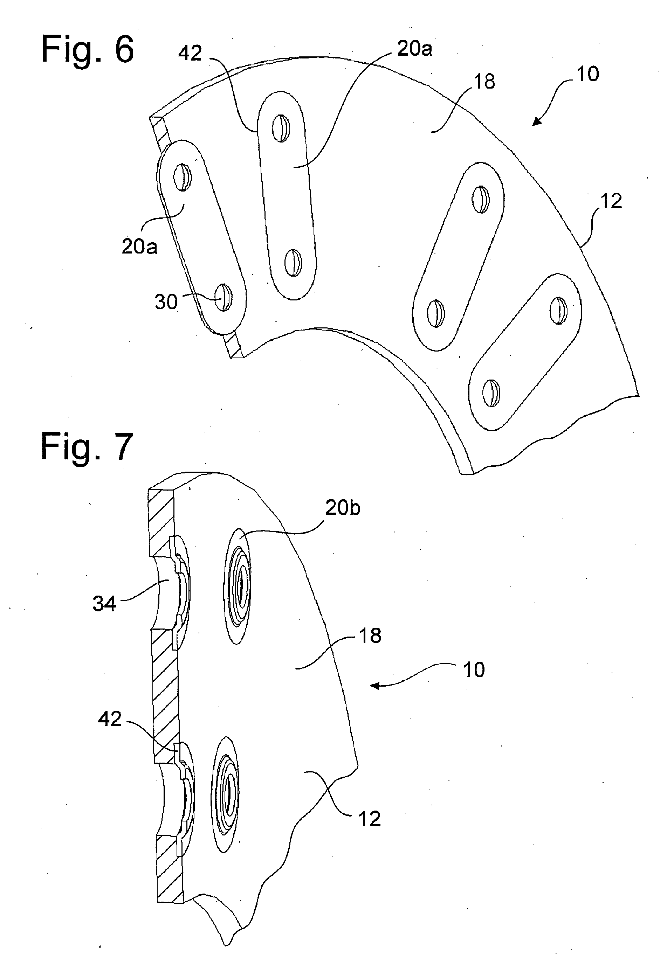

Bei der in Fig. 6 gezeigten Variante sind an der Rückseite 18 des Reibelements 12 für die vorangehend bereits beschriebenen langgestreckten Anbindungselemente 20a wieder an deren Form und Dicke angepasste Vertiefungen 42 bereitgestellt, so dass auch hier wieder ein bündiger Abschluss und eine im Wesentlichen ohne Vorsprünge ausgestaltete Gesamtrückoberfläche des Reibbelags 10 vorgesehen ist.

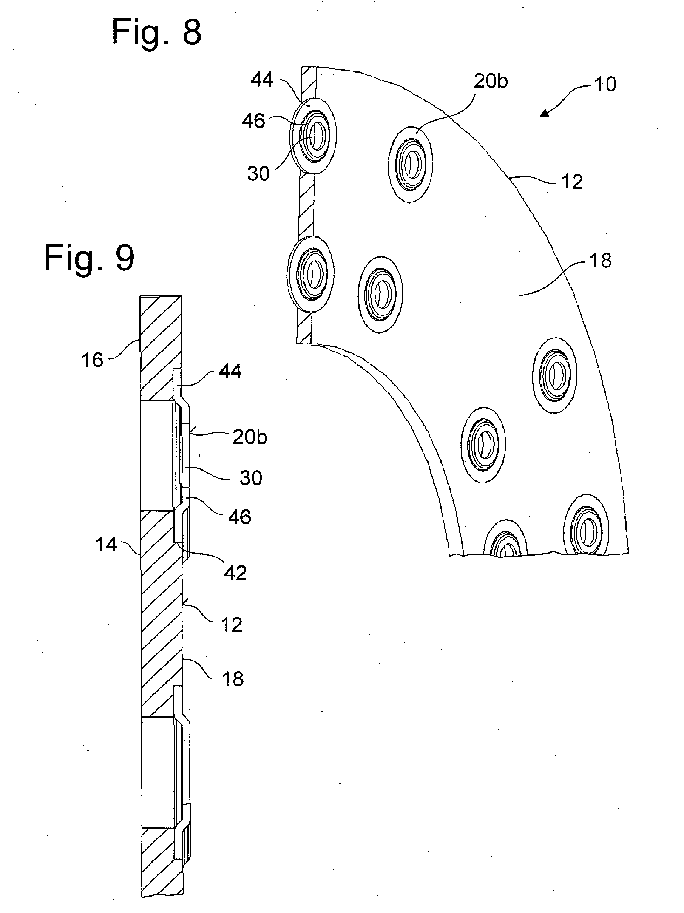

Eine weitere Ausgestaltungsvariante eines erfindungsgemäßen Reibbelags ist in den Fig. 7 - 9 gezeigt. Man erkennt hier im Wesentlichen ring- bzw. kreisförmig ausgestaltete Anbindungselemente 20b. Diese sind beispielsweise wiederum in Gruppen und ggf. zueinander radial gestaffelt an der Rückseite 18 des Reibelements 12 in dafür wieder vorgesehenen Vertiefungen 42 aufgenommen bzw. verklebt.

Die hier erkennbaren Anbindungselemente 20b weisen einen Körperbereich 44 auf, mit welchem diese Anbindungselemente 20b am Reibelement 12 festgelegt sind bzw. in den Vertiefungen 42 aufgenommen sind. Axial dazu versetzt liegt ein Befestigungsbereich 46, in dem auch die jeweilige Durchgangsöffnung 30 ausgestaltet ist. Dieser Befestigungsbereich 46 ist bezüglich des Körperbereichs 44 so versetzt, dass er einen größeren Abstand zur Reibseite 14 bzw. der daran gebildeten Reiboberfläche 16 aufweist. Auf diese Art und Weise wird es möglich, die Materialstärke des Reibelements 12 in größerem Ausmaß bei Auftreten von Verschleiß nutzen zu können. Um dabei beispielsweise eine Erhöhung der gesamten axialen Dicke einer Kupplungsscheibe zu vermeiden, können in dem Reibbelagträger 32, wie er in Fig. 2 gezeigt ist, Vertiefungen ausgebildet sein, in welche dann die versetzt liegenden Befestigungsbereiche 46 der Anbindungselemente 20b eingreifend positioniert werden können.

Es sei hier darauf hingewiesen, dass selbstverständlich auch bei den anderen gezeigten bzw. beschriebenen Anbindungselementen diejenigen Bereiche, in welchen die Durchgangsöffnungen 30 ausgestaltet sind, mit einem entsprechenden Versatz bezüglich des verbleibenden Körperbereichs bereitgestellt werden können.

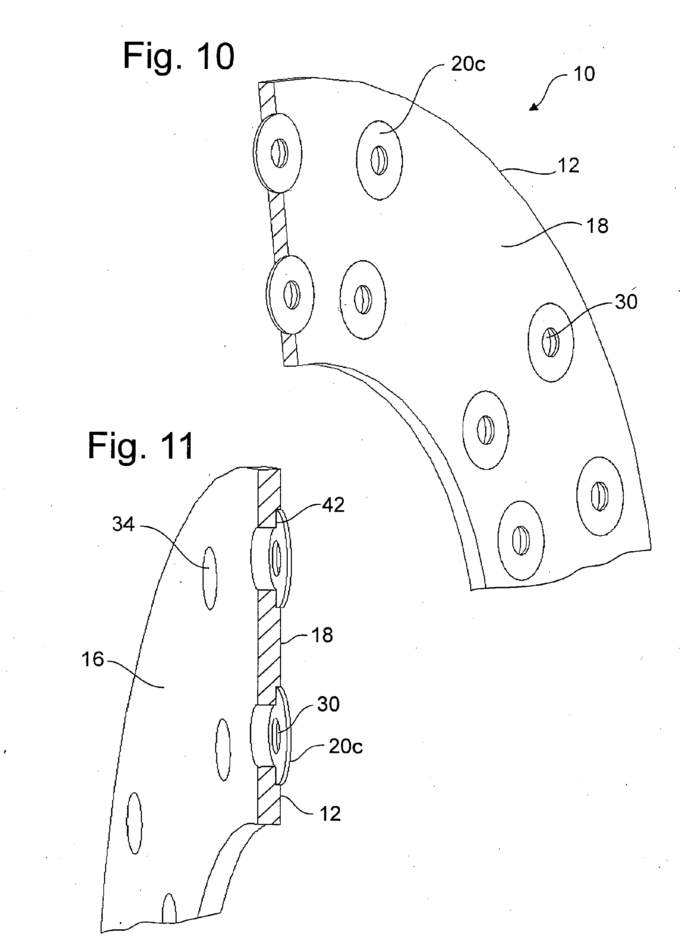

Die Fig. 10 und 11 zeigen eine Variante, bei welcher die ring- bzw. kreisförmig ausgestalteten Anbindungselemente 20c wieder flächig und eben ausgestaltet sind und in dafür vorgesehenen Vertiefungen.42 an der Rückseite 18 des Reibelements 12 aufgenommen sind.

Es ist selbstverständlich, dass die verschiedenen Ausgestaltungsmerkmale der vorangehend beschriebenen Anbindungselemente bzw. die Art, an deren Anbindung an das Reibelement beliebig kombiniert werden können. Das heißt, es können selbstverständlich auch mit Versatz ausgestaltete Anbindungselemente auf die Rückseite, d.h. nicht in dafür vorgesehene Vertiefungen, aufgeklebt werden. Weiter ist es selbstverständlich, dass bei allen dargestellten Ausgestaltungsvarianten eines erfindungsgemäßen Reibbelags das in der Fig. 2 erkennbare Ringelement 38 vorgesehen werden kann, um eine radiale Stabilisierung zu erlangen, die aufgrund des Vorsehens voneinander getrennt ausgestalteter Anbindungselemente im Wesentlichen nicht mehr durch diese übernommen werden kann. Gleichwohl trägt auch die mögliche radiale Wechselwirkung der der Befestigung an einem Reibbelagträger dienenden Befestigungselemente mit dem zugehörigen Reibelement zu einer Radialstabilisierung bei.

Elementar ist bei der erfindungsgemäßen Ausgestaltung eines Reibbelags, dass trotz der Möglichkeit, die Anbindung an einen Reibbelagträger im radialen Bereich eines Reibelements zu realisieren, eine Verminderung der Gesamtmasse und somit des Massenträgheitsmoments erlangt werden kann. Dies kann insbesondere dann von Bedeutung sein, wenn ein erfindungsgemäßer Reibbelag bei einer Kupplungsscheibe mit Torsionsschwingungsdämpfer eingesetzt wird, bei welcher im Bereich radial innerhalb der jeweiligen Reibelemente nur wenig Bauraum beispielsweise für die Anbindung an einen Reibbelagträger vorhanden ist. Es ist weiterhin selbstverständlich, dass bei einer Kupplungsscheibe zwei derartige erfindungsgemäße Reibbeläge jeweils mit in verschiedenen Richtungen orientierten Reiboberflächen vorgesehen sein können. Ferner wird darauf hingewiesen, dass nicht notwendigerweise bei einem erfindungsgemäßen Reibbelag ein ringartiges Reibelement vorgesehen sein muss. Vielmehr ist auch der Einsatz ringsegmentartiger Reibelemente möglich, so dass entsprechend segmentartige Reibbeläge bereitgestellt werden, die dann zu einem Gesamtreibbelag mit insgesamt ringartiger Struktur zusammengefügt bzw. an einem Reibbelagträger festgelegt werden können.

## Patentansprüche

1. Reibbelag für eine Kupplungsscheibe einer Reibungskupplung, umfassend wenigstens ein ringförmiges oder ringsegmentförmiges Reibelement (12) und an einer von einer Reibseite (14) abgewandten Rückseite (18) des Reibelements (12) eine Mehrzahl von mit dem Reibelement (12) fest verbundenen Anbindungselementen (20; 20a; 20b; 20c), über welche das Reibelement (12) an einem Reibbelagträger (32) festzulegen ist.

2. Reibbelag nach Anspruch 1,
**dadurch gekennzeichnet, dass** die Anbindungselemente (20; 20a; 20b; 20c) an dem Reibelement (12) durch Verklebung festgelegt sind.

3. Reibbelag nach Anspruch 1 oder 2,
**dadurch gekennzeichnet, dass** jedes Anbindungselement (20; 20a; 20b; 20c) wenigstens eine Durchgangsöffnung (30) für ein Befestigungselement (36) aufweist.

4. Reibbelag nach Anspruch 3,
**dadurch gekennzeichnet, dass** wenigstens eine Durchgangsöffnung (30) im radialen Erstreckungsbereich des Reibelements (12) liegt.

5. Reibbelag nach Anspruch 4,
**dadurch gekennzeichnet, dass** in dem Reibelement (12) in Zuordnung zu der wenigstens einen Durchgangsöffnung (30) eine Aussparung (34) ausgebildet ist, so dass keine Befestigungswechselwirkung zwischen dem Reibelement (12) und einem Befestigungselement (36)im Wesentlichen orthogonal zu der Reibseite (14) des Reibelements (12) besteht.

6. Reibbelag nach einem der Ansprüche 3 bis 5,
**dadurch gekennzeichnet, dass** wenigstens ein eine Durchgangsöffnung aufweisender Befestigungsbereich (46) bezüglich eines an dem Reibelement (12) festgelegten Körperbereichs (44) eines Anbindungselements (20b) versetzt ist.

7. Reibbelag nach Anspruch 6,
**dadurch gekennzeichnet, dass** der Befestigungsbereich (46) in Richtung von der Reibseite (14) des Reibelements (12) weg versetzt ist.

8. Reibbelag nach einem der Ansprüche 1 bis 7,
**dadurch gekennzeichnet, dass** bei wenigstens einem Anbindungselement (20; 20a; 20b; 20c) an der Rückseite (18) des Reibelements (12) eine Vertiefung (42) ausgebildet ist, in welcher das Anbindungselement (20; 20a; 20b; 20c) aufgenommen ist.

9. Reibbelag nach Anspruch 8,
**dadurch gekennzeichnet, dass** das in der Vertiefung aufgenommene Anbindungselement (20; 20a; 20b; 20c) im Wesentlichen bündig mit der Rückseite (18) des Reibelements (12) abschließt.

10. Reibbelag nach einem der Ansprüche 1 bis 9,
**dadurch gekennzeichnet, dass** wenigstens ein Anbindungselement (20b; 20c) im Wesentlichen kreisförmig ausgebildet ist.

11. Reibbelag nach einem der Ansprüche 1 bis 10,
**dadurch gekennzeichnet, dass** wenigstens ein Anbindungselement (20a) langgestreckt ausgebildet ist.

12. Reibbelag nach einem der Ansprüche 1 bis 11,
**dadurch gekennzeichnet, dass** wenigstens ein Anbindungselement (20) kreuzförmig oder sternförmig ausgebildet ist.

13. Reibbelag nach einem der Ansprüche 1 bis 12,
**dadurch gekennzeichnet, dass** wenigstens ein Anbindungselement (20; 20a; 20b; 20c) aus Blechmaterial gebildet ist.

14. Kupplungsscheibe, umfassend wenigstens einen Reibbelag (10) nach einem der vorangehenden Ansprüche, wobei der Reibbelag (10) im Bereich der Anbindungselemente (20; 20a; 20b; 20c) durch Befestigungselemente (36) an einem Reibbelagträger (32) festgelegt ist.

15. Kupplungsscheibe nach Anspruch 14,
**dadurch gekennzeichnet, dass** die Befestigungselemente (36) Nietbolzen umfassen.

16. Kupplungsscheibe nach Anspruch 14 oder 15,
**dadurch gekennzeichnet, dass** die Befestigungselemente (36) im Bereich des Reibbelags (10) zur Festlegung desselben an dem Reibbelagträger (32) nur an den Anbindungselementen (20; 20a; 20b; 20c) angreifen.
